# EUROPÄISCHE PATENTANMELDUNG

(11) **EP 3 484 127 A1**
(43) Veröffentlichungstag der Anmeldung: **15.05.2019**
(21) Anmeldenummer: 17201103.3
(22) Anmeldetag: 10.11.2017
(51) Int. Cl.: H04L 29/12, H04L 29/08

(54) **VERFAHREN UND VORRICHTUNG ZUR SICHEREN VERGABE VON ADRESSEN AN MODULE IN EINEM NETZWERK, ADRESSIERUNGSEINRICHTUNG, COMPUTERPROGRAMMPRODUKT UND INDUSTRIELLE ANLAGE**

(71) Anmelder: Siemens Aktiengesellschaft, 80333 München (DE)
(72) Erfinder: Barthel, Herbert, 91074 Herzogenaurach (DE); Taschke, Ulrich, 90766 Fürth (DE); Walter, Maximilian, 90408 Nürnberg (DE)

(57) **Zusammenfassung**

Die Erfindung betrifft ein Verfahren und eine Vorrichtung zur sicheren Vergabe von Adressen (A) an Module (1a, 1b, 1c), die in einem Netzwerk (10) mit einer Datenverbindung (3) verbunden sind. Die Adresse (A) des jeweiligen Moduls (1a, 1b, 1c) umfasst eine Modul-Adresse (A(1a), A(1b), A(lc)) und eine subsidiäre Adresse (Int(1a), Int(lb), Int(1c)). Die subsidiäre Adresse (Int(1a), Int(lb), Int(lc)) gibt an, an welcher Position sich das jeweilige Modul (1a, 1b, 1c) im Netzwerk (10) befindet und/oder an welchem Interface (Int_1, Int 2, Int_3) das jeweilige Modul (1a, 1b, 1c) angeschlossen ist. Alternativ oder zusätzlich kann die subsidiäre Adresse (Int(1a), Int(lb), Int(lc)) angeben, an welchem Steckplatz (Sl, S2, S3) des jeweiligen Interfaces (Int_1, Int_2, Int_3) das Modul (1a, 1b, 1c) angeschlossen ist. In einem Adressierungsschritt (v1) wird die Adresse (A) dem jeweiligen Modul (1a, 1b, 1c) zugewiesen und in einem Prüfungsschritt (v2) geprüft, ob die jeweilige Adresse (A) des jeweiligen Moduls (1a, 1b, 1c) eindeutig ist. Bei einer nicht-Eindeutigkeit wird ein Signal (S) bereitgestellt. Anhand des Signals (S) wird zumindest bei einem Modul (1a, 1b, 1c) die subsidiäre Adresse (Int(1a), Int(lb), Int(lc)) geändert. Vorteilhaft ist so auf einfache und sichere Art und Weise eine Vergabe von Adressen (A) in einem Netzwerk (10) möglich.

## Beschreibung

Die Erfindung betrifft ein Verfahren und eine Vorrichtung zur sicheren Vergabe von Adressen an Module in einem Netzwerk. Die Erfindung betrifft weiter eine Adressierungseinrichtung, ein Computerprogrammprodukt und eine industrielle Anlage.

Anlagen weisen in der Regel eine Vielzahl von Module auf, wobei die Module, insbesondere durch ein Interface, mit einem Netzwerk verbunden sind. Beispielhaft sind solche Module Schaltmodule, Sensoren oder auch eine speicherprogrammierbare Steuerung. Die Module kommunizieren durch ein Netzwerk, wobei die Module mit dem Netzwerk verbunden sind. Für eine sichere Kommunikation weist das jeweilige Modul in dem Netzwerk eine Adresse auf.

Die EP 3 051 779 A1 offenbart ein Verfahren zur sicheren Kommunikation.

Es ist Aufgabe der Erfindung, ein Verfahren und eine Vorrichtung zur Vergabe von Adressen in einem Netzwerk bereitzustellen.

Es ist insbesondere Aufgabe der Erfindung, eine sichere Kommunikation der Module in dem Netzwerk zu ermöglichen. Die Aufgabe wird mit einem Verfahren nach Anspruch 1 gelöst. Weiter wird das Verfahren mit einem Computerprogrammprodukt nach Anspruch 10 gelöst. Die Aufgabe wird darüber hinaus durch eine Adressierungsvorrichtung nach Anspruch 12, eine Vorrichtung nach Anspruch 13 und eine industrielle Anlage mit einer solchen Vorrichtung gelöst.

Weitere vorteilhafte Ausgestaltungen der Erfindung sind Gegenstand der abhängigen Ansprüche.

Die Erfindung basiert insbesondere auf der Erkenntnis, dass eine sichere Kommunikation eine eindeutige Adressierung von Modulen in einem Netzwerk erfolgt. Problematisch an bisherigen Verfahren zur Vergabe einer sicheren Adressierung. Demnach ist es sinnvoll, sicherzustellen, dass eine Information von einem Sicherheitsschalter auch an die richtige Steuerung übermittelt wird.

Bei dem Verfahren zur sicheren Vergabe von Adressen an Module in einem Netzwerk weist das jeweilige Modul eine Modul-Adresse auf oder bekommt die Modul-Adresse zugewiesen, wobei die Adresse die Modul-Adresse und eine subsidiäre Adresse umfasst, wobei die subsidiäre Adresse die jeweilige Position des jeweiligen Moduls in dem Netzwerk angibt,
wobei in einem Adressierungsschritt das jeweilige Modul mit zumindest der jeweiligen subsidiären Adresse beaufschlagt wird oder die jeweiligen Adresse durch das jeweilige Modul bereitgestellt werden,
wobei in einem Prüfschritt geprüft wird, ob die Kombination der jeweiligen Modul-Adresse mit der jeweiligen subsidiären Adresse eindeutig ist,
wobei bei einer nicht-eindeutigen Belegung der Adresse ein Signal ausgegeben wird.

Gegebenenfalls erfolgt das hier beschriebene Verfahren lediglich für die Adressierung derjenigen Module in dem Netzwerk, welche einer sicheren Kommunikation bedürfen.

Eine sichere Kommunikation erfolgt vorteilhaft zwischen sicherheitsrelevanten Modulen wie Not-Aus-Schalter-Modulen, Temperatur-Sensor-Modulen, einem sicherheitsrelevanten Antrieb und/oder einer Speicherprogrammierbaren Steuerung. So kann in einem großen Netzwerk mit einer Vielzahl von Modulen das Verfahren vereinfacht werden.

Nach dem Anschluss des jeweiligen Moduls gemäß dem Kontaktplan erfolgen vorteilhaft der Adressierungsschritt und/oder der Prüfschritt.

Das Modul kann eine Prozesseinheit (CPU) wie eine speicherprogrammierbare Steuerung (SPS), eine Input/Output-Modul, ein Sensor, ein Aktor, ein Antrieb, oder ein Schaltelement sein.

Das Netzwerk kann als Ethernet, insbesondere als industrielles Ethernet wie PROFI-Bus, PROFI-Net, PROFI-Safe, oder EtherCAT, ausgebildet sein.

Das Netzwerk auch als nicht-lokales Netzwerk ausgebildet sein.

Eine Modul-Adresse kann eine Mac-Adresse sein. In einem besonders einfachen Fall kann die Moduladresse auch den ModulTyp wie ein Sensor, ein Aktor, ein Antrieb, ein I/O-Modul oder eine I/O-Schnittstellt sein. Die Moduladresse umfasst vorteilhaft den Typus und/oder die jeweilige Funktion des jeweiligen Moduls. Unter einer Funktion des Moduls wird beispielsweise die Messung einer Temperatur oder die Funktion eines Not-Aus-Schalters verstanden.

Die subsidiäre Adresse gibt an, an welcher Stelle das jeweilige Modul in dem Netzwerk positioniert ist. Bei einer einfachen Ausgestaltung kann die subsidiäre Adresse auch ein Steckplatz des Moduls in einem Router oder in einem Interface angeben.

Hierzu kann das Netzwerk in eine Mehrzahl von Bereichen oder Ebenen eingeteilt sein. Vorteilhaft ist der Steckplatz eines Moduls in einem Interface eine eigene Ebene in einem Netzwerk.

Durch die subsidiäre Adresse des jeweiligen Moduls können auch Module mit der jeweils gleichen Modul-Adresse in einem Netzwerk eineindeutig adressiert werden. Somit ist eine sichere Kommunikation der Module miteinander oder untereinander gewährleistet.

In dem Adressierungsschritt wird vorzugsweise das Modul mit einer subsidiären Adresse und/oder der Modul-Adresse beaufschlagt. Bei der Zuweisung der Modul-Adresse des jeweiligen Moduls wird vorteilhaft die Funktion des jeweiligen Moduls dem jeweiligen Modul zugeordnet. Hierzu kann die jeweilige Modul-Adresse des jeweiligen Moduls durch das Netzwerk abgefragt werden. In einem Teilschritt kann die jeweilige Modul-adresse mit der jeweiligen subsidiären Adresse kombiniert werden und dem jeweiligen Modul bereitgestellt werden.

Alternativ oder zusätzlich kann auch das jeweilige Modul selbst seine Moduladresse und/oder seine subsidiäre Adresse bereitstellen.

Bei dem Prüfungsschritt kann geprüft werden, ob das jeweilige Modul eine eindeutige Adresse aufweist. Möglich ist auch eine Prüfung der Eindeutigkeit der subsidiären Adresse. Durch eine eindeutige subsidiäre Adresse ist ein Modul in dem Netzwerk austauschbar, ohne dass eine neue Adresse, insbesondere eine neue subsidiäre Adresse, vergeben werden muss.

Der Prüfschritt erfolgt beispielhaft durch eine Kontaktaufnahme zu dem entsprechenden Modul. Bei erfolgreicher Kontaktaufnahme mit dem entsprechenden Modul kann von einer richtigen Adressierung und/oder einer richtigen Position des Moduls in dem Netzwerk ausgegangen werden. Bei der Kontaktaufnahme werden vorteilhaft die Moduladresse und/oder die Funktion des jeweiligen Moduls abgefragt. Vorteilhaft erfolgt ein Vergleich mit dem Kontaktplan.

Bei der Kontaktaufnahme wird vorteilhaft dem jeweilig kontaktierten Modul ein Telegramm zugeführt. Das Telegramm weist vorteilhaft die subsidiäre Adresse des jeweils kontaktierten Moduls auf. Das kontaktierte Modul reagiert vorteilhaft auf das Signal durch eine Bereitstellung seiner Modul-Adresse und/oder seiner Funktion.

Wird festgestellt, dass zwei Module eine gleiche Adresse oder zumindest eine gleiche subsidiäre Adresse bei einem gleichen Modul-Typus oder eine gleiche subsidiäre Adresse aufweisen, so wird ein Signal bereitgestellt.

Vorteilhaft wird bei dem Adressierungsschritt die Modul-Adresse dem jeweiligen Modul zugewiesen. Bei der Zuweisung kann die Funktion des jeweiligen Moduls überprüft werden. Stimmt die Funktion des jeweiligen Moduls nicht mit der zu erwarteten Funktion überein, wird das Signal bereitgestellt.

Ein Modul-Typus ist ein Sensor, ein Schalter, ein Antrieb, eine speicherprogrammierbare Steuerung oder ein Input/Output-Modul.

Das Signal kann auf einem Display eines Moduls angezeigt werden, welches dem Netzwerk zugeordnet ist. Das Signal kann die jeweiligen Module oder eines der Module kennzeichnen, welche(s) ggf. eine gleiche Adresse oder eine gleiche subsidiäre Adresse(n) aufweisen/aufweist.

Dem Signal folgend kann ein Benutzer zumindest die subsidiäre Adresse eines der Module verändern. Vorteilhaft kann die Änderung auch automatisiert erfolgen, indem beispielhaft die Struktur der subsidiären Adresse so lange verändert wird, bis eine jeweils eineindeutige Vergabe der jeweiligen Adresse möglich ist.

Durch die Erfindung ist sichergestellt, dass die Vergabe von Adressen in einem Netzwerk eindeutig ist. So kann eine sichere Kommunikation zwischen zwei Modulen gewährleistet werden.

In einer vorteilhaften Ausgestaltung der Erfindung wird das Verfahren mit einer Adressierungseinrichtung ausgeführt, wobei die Adressierungseinrichtung hierzu dem Netzwerk zugeordnet wird.

Die Adressierungseinrichtung kann als Hardware oder zumindest teilweise als Computerprogrammprodukt ausgebildet sein. Die Adressierungseinrichtung ist vorteilhaft in eine Engineering-Plattform eingebettet. Ein Beispiel für eine Engineering-Plattform ist des TIA-Portals der Firma Siemens AG. Die Adressierungseinrichtung kann auch als Software-Applikation (APP) ausgeführt werden, welche lediglich für das Verfahren ausgeführt wird. Die Software-Applikation kann auch eigenständig ausführbar sein.

Die Wirkverbindung der Adressierungseinrichtung mit dem Netzwerk und mit den Modulen kann auch durch eine Wirkverbindung mit einer einem Prozess-Modul des Netzwerkes, beispielhaft mit einer speicherprogrammierbaren Steuerung, erfolgen.

Vorteilhaft erfolgen der Adressierungsschritt sowie der Prüfungsschritt mit Hilfe der Adressierungseinrichtung. Vorteilhaft stellt die Adressierungseinrichtung das Signal bereit. Vorteilhaft zeigt auch das Modul, welches ggf. eine nichteindeutige Adresse aufweist, das Signal an.

Die jeweils geänderte Adresse wird vorteilhaft in zumindest einem der jeweiligen Prozess-Module hinterlegt und/oder durch das jeweilige Prozessmodul bereitgestellt.

Bei einer automatischen Änderung der jeweiligen Adresse des jeweiligen Moduls kann die jeweils geänderte Adresse oder zumindest die jeweilige subsidiären Adresse des jeweiligen Moduls ebenfalls durch die Adressierungseinrichtung bereitgestellt werden.

Nach Beendigung der Vergabe der Adressen kann die Adressierungseinrichtung aus dem Wirkbereich des Netzwerks entfernt werden.

Mit Hilfe der Adressierungseinrichtung kann das Verfahren besonders sicher und einfach für den Benutzer ausgestaltet sein.

Bei einer weiteren Ausgestaltung der Erfindung sind zumindest ein Teil der Module mit einem Interface verbunden, wobei das jeweilige Modul über das Interface mit dem Netzwerk verbunden ist.

Das Interface kann als Input/Output-Modul ausgebildet sein. Das Interface kann auch als Netzwerk-Knoten oder als Router ausgebildet sein. Vorteilhaft verbindet das Interface Sensoren, Aktoren oder Schaltelemente mit dem Netzwerk.

Vorteilhaft kann das Interface die Zuweisung einer der Adresse unterstützen. Vorteilhaft erfolgt die Vergabe der Adressen des jeweils an das Interface angeschlossenen Moduls durch das Interface. Ggf. weist das Interface auch eine Adresse auf.

Alternativ dient das Interface lediglich zur Vergabe der subsidiären Adresse des jeweils mit dem Interface verbunden Moduls.

Vorteilhaft umfasst eine Adresse des jeweiligen Moduls die jeweilige Funktion und den Steckplatz des jeweiligen Moduls an dem Interface. Vorteilhaft umfasst die jeweilige Modul-Adresse die Funktion es jeweiligen Moduls. Weiter vorteilhaft umfasst die subsidiäre Adresse den Steckplatz des jeweiligen Moduls in dem jeweiligen Interface.

Durch die einfache Adresse kann ein Modul problemlos gegen ein anderes Modul der gleichen Funktion getauscht werden, ohne dass das hier beschriebene Verfahren zur Vergabe einer Adresse erneut durchgeführt werden muss.

Vorteilhaft dient das Interface zur Unterstützung der Kommunikation der Module, die an dem Interface angeschlossen sind. Hierzu weist das Interface eine Verbindung zum Netzwerk sowie Steckplätze für einzelne Module auf. Die Module, die an dem Interface angeschlossen sind, kommunizieren vorteilhaft durch das Interface mit einem weiteren Modul.

Ein Interface weist vorteilhaft eine Mehrzahl von Steckplätzen auf. Steckplätze sind Anschlüsse für Module an das Interface. Die Steckplätze können durch einen lokalen Bus, z.B. einen Rückwand-Bus, ausgebildet sein.

Vorteilhaft entspricht die subsidiäre Adresse des jeweiligen Moduls zumindest teilweise aus dem jeweilig belegten Steckplatz des Moduls in dem Interface.

Beispielhaft sind ein erstes Modul mit einem ersten Steckplatz und ein zweites Modul mit einem dritten Steckplatz eines Interfaces verbunden. Durch die unterschiedlichen Steckplätze weisen die Module jeweils eine unterschiedliche subsidiäre Adresse auf.

Durch die Einführung von Interfaces zum Anschluss der Module an das Netzwerk benötigt das jeweilige Modul nicht notwendig eine eigene Adresse. Das Interface kann, insbesondere durch den Steckplatz und den Modul-Typus die Adresse des Moduls festlegen.

Zudem können die Interfaces jeweils baugleich ausgeführt sein und die Kommunikation des jeweiligen Moduls mit dem Netzwerk koordinieren.

Bei einer weiteren vorteilhaften Ausgestaltung der Erfindung werden die Adressen nur dann dem jeweiligen Modul oder dem jeweiligen Interface bereitgestellt, insofern die Adressen eindeutig sind, wobei nach Ausgabe des Signals und einer Änderung der jeweiligen nicht-eindeutigen Adresse der Adressierungsschritt erneut erfolgt.

Vorteilhaft erfolgt die Vergabe der Adressen mit Hilfe der Adressierungseinrichtung an das jeweilige Modul nur dann, falls die jeweilige Adresse eineindeutig ist.

Durch die Erfindung wird sichergestellt, dass die Kombination der subsidären Adressen hinter den Interfaces im Netz eindeutig ist. So kann über die Prüfung der Kommunikation zu allen betreffenden (funktional sicheren) Modulen gezeigt werden, ob die Adressvergabe fehlerfrei ist.

Sollte das Signal, insbesondere wegen **einer Nichteindeutigkeit** bereitgestellt worden sein, wird zumindest eine der Adressen geändert. Die Änderung kann durch ein Wechsel des Steckplates des jeweiligen Moduls in den jeweils zugeordneten Interface erfolgen. Der Wechsel kann automatisiert oder manuell erfolgen.

Danach wird vorteilhaft der Prüfungsschritt ausgeführt. Ist der Prüfungsschritt erfolgreich, werden die Adressen dem jeweiligen Modul und/oder dem jeweiligen Interface zugeordnet. Die Zuordnung kann mit Hilfe der Adressierungseinrichtung erfolgen.

Falls der Prüfungsschritt ergibt, dass die Zuordnung der Adressen eindeutig ist, wird vorteilhaft der Adressierungsschritt ausgeführt. Hierbei können die Adressen dem jeweiligen Modul fest oder nicht-flüchtig zugeordnet werden.

Vorteilhaft kann der Adressierungsschritt dergestalt erfolgen, dass die Adressen des jeweiligen Moduls bereitgestellt werden und im anschließenden Prüfungsschritt die Eindeutigkeit der Adressen geprüft wird. Die Adressen werden vorteilhaft durch die Adressierungseinrichtung bereitgestellt. Die Adressen werden vorteilhaft auch einem Prozess-Modul bereitgestellt.

In einer weiteren vorteilhaften Ausgestaltung der Erfindung wird nach dem Adressierungsschritt der Prüfschritt ausgeführt, wobei die jeweilige Adresse dem jeweiligen Modul zugeordnet wird, falls der Prüfschritt keine nicht-Eindeutigkeit feststellt.

Falls bei dem Prüfschritt festgestellt wird, dass zwei Modulen zumindest eine übereinstimmende subsidiäre Adresse aufweisen, kann die jeweilige subsidiäre Adresse verändert werden.

Falls bei dem Prüfschritt festgestellt wird, dass die Adressen eindeutig sind, so erfolgt eine Zuweisung der jeweiligen Adresse an das jeweilige Modul.

Die Adresse kann dann fest dem Modul zugeordnet werden. Insbesondere kann die jeweilige Adresse nicht-flüchtig in dem jeweiligen Modul und/oder in einem Prozessmodul hinterlegt werden.

Bei einer weiteren vorteilhaften Ausgestaltung der Erfindung kommunizieren jeweils zwei Module miteinander durch zumindest ein Telegramm, wobei die Adresse des jeweiligen Telegramms beigeordnet ist.

Das Telegramm weist vorteilhaft die Adresse desjenigen Moduls auf, welches das Telegramm bereitstellt.

Ist das jeweilige Modul an ein Interface angeschlossen, kann das Telegramm auch durch das Interface an das Netzwerk bereitgestellt werden.

Je nach Ausgestaltung wird lediglich die Adresse des Moduls oder Interfaces dem Telegramm zugeordnet, von welchem das Telegramm ausgeht. In einer eineindeutig gerichteten Kommunikation kann auch die Adresse desjenigen Moduls dem Telegramm zugeordnet werden, welcher der Empfänger des Telegramms sein soll.

So kann ein Not-Aus-Schalt-Modul ausschließlich mit einer speicherprogrammierbaren Steuerung oder einem weiteren Modul kommunizieren, welches die Anlage bei Empfang eines Telegramms von dem Not-Aus-Schalt-Moduls in einen sicheren Zustand überführt.

Durch die Zuordnung der jeweiligen Adresse zu einem Telegramm erlaubt eine sichere und zielgerichtete Kommunikation von Modulen in dem Netzwerk.

Bei einer weiteren Ausgestaltung der Erfindung wird die subsidiäre Adresse durch die Verbindung mit dem jeweiligen Interface festgelegt.

Durch die Festlegung der Adresse des jeweils an das Modul angeschlossen Moduls erfolgt kann die subsidiären Adresse durch den Steckplatz definiert sein.

Vorteilhaft umfasst in einer einfachen Ausgestaltung der Erfindung die Adresse des jeweiligen Moduls durch den Steckplatz, an dem das jeweilige Modul an mit dem Interface verbunden ist, und dem Modul-Typus, z.B. Schalt-Modul, ein Sensor-Modul oder ein Aktor (-Modul).

Durch die Zuordnung des Steckplatzes an einem Interface die Adresse einfach und besonders sicher zugeordnet sein. Die Möglichkeit, dass ein Telegramm unerkannt von einem falschen Sensor bereitgestellt wird, kann somit mit hoher Sicherheit ausgeschlossen werden.

Bei einer weiteren vorteilhaften Ausgestaltung der Erfindung wird die jeweilige Adresse zumindest in dem jeweiligen Modul, dem jeweiligen Interface und/oder in der Adressierungseinrichtung gespeichert.

Die Speicherung der jeweiligen Adresse erfolgt vorteilhaft dann, wenn kein Signal bereitgestellt wird.

Vorteilhaft wird die Adresse auf in dem jeweiligen Interface hinterlegt, an dem das jeweilige Modul angeschlossen ist. Vorteilhaft wird die jeweilige Adresse in den jeweiligen Modul nicht-flüchtig gespeichert. Alternativ oder zusätzlich werden die Adressen in der Adressierungseinrichtung und/oder ein Prozess-Modul, insbesondere nicht-flüchtig, gespeichert.

Die jeweilige Adresse ist vorzugsweise in dem jeweiligen Prozess-Modul, z.B. der speicherprogrammierbaren Steuerung, und optional in dem jeweiligen Modul oder in dem jeweiligen Interface, dem das jeweilige Modul zugeordnet ist, gespeichert.

Durch die Speicherung der jeweiligen Adresse des Moduls in dem jeweiligen Interface kann das Modul gewechselt werden, ohne dass eine neue Adresse zugeordnet werden muss.

Die Adresse kann auch in dem jeweiligen Modul selbst gespeichert werden. So kann auch kann auch bei Ausfall des Prozess-Moduls die Kommunikation zwischen den weiteren Modulen weiterhin aufrecht erhalten werden.

Bei einer weiteren vorteilhaften Ausgestaltung der Erfindung ist das jeweilige Modul ein Sensor, ein Aktor, ein Schaltelement, oder eine speicherprogrammierbare Steuerung.

Ein Aktor ist insbesondere ein Antrieb, z.B. ein Motor, der über einen Frequenzumrichter mit dem Netzwerk verbunden ist.

Ein Schaltelement oder ein Schalt-Modul kann ein Not-Aus-Schalter, eine Lichtschranke oder ein Wahlschalter für einen Funktionsmodus einer Anlage sein.

Die speicherprogrammierbare Steuerung dient oft als Prozess-Modul, beispielhaft zur Steuerung bzw. Regelung von Modulen, insbesondere der jeweiligen Aktoren. Die speicherprogrammierbare Steuerung dient vorteilhaft zur Unterstützung des hier beschriebenen Verfahrens und/oder zur Unterstützung der Adressierungseinrichtung.

Bei einer weiteren vorteilhaften Ausgestaltung der Erfindung wird ein Kontaktplan erstellt, wobei anhand des Kontaktplans die Positionierung des jeweiligen Moduls in dem Netzwerk oder ein Anschluss des jeweiligen Moduls an den jeweiligen Steckplatz des jeweiligen Interfaces erfolgt.

Weiter vorteilhaft erfolgt die Erstellung eines Kontaktplans, wobei anhand des Kontaktplans die Positionierung des jeweiligen Moduls, insbesondere aller Module, in dem Netzwerk erfolgt, und/oder der jeweilige Anschluss des jeweiligen Moduls, vorzugsweise aller Module an ihrem jeweiligen Steckplatz des jeweiligen Interfaces erfolgt, wobei eine überprüft wird, ob das jeweilige Moduls vorzugsweise alle Module gemäß dem Kontaktplan erreichbar sind.

Bei einem positiven Ergebnis, insbesondere wenn das jeweilige Modul gemäß dem Kontaktplan erreichbar ist, wird ein positives Prüfsignal ausgegeben. Das positive Prüfsignal zeigt an, dass das jeweilige Modul erreichbar ist, oder dass alle Module gemäß dem Kontaktplan erreichbar sind. Bei einem positiven Prüfsignal wird dem Benutzer vorteilhaft mitgeteilt, dass die jeweilige Verbindung im Netzwert fehlerfrei funktioniert bzw. sicher ist.

Vorteilhaft erfolgt die Erstellung des Kontaktplans mit Hilfe eines Computerprogrammproduktes, insbesondere einem Engineering-Tools.

Die Positionierung des jeweiligen Moduls erfolgt durch den Anschluss des Moduls an der entsprechenden Stelle des Netzwerkes. Insbesondere erfolgt die Positionierung des Moduls durch die Verbindung des jeweiligen Moduls mit dem jeweiligen Steckplatzes des jeweiligen Interfaces.

Nach dem Anschluss des jeweiligen Moduls mit dem Netzwerk und/oder dem jeweiligen Interface erfolgt die Zuweisung der jeweiligen Moduladresse und/oder der jeweiligen subsidiären Adresse.

Vorteilhaft erfolgt nach Zuweisung der Adresse mit Hilfe des Prüfschrittes die Prüfung, ob der Anschluss des jeweiligen Moduls an der richtigen Stelle erfolgt ist.

Diese Prüfung zeigt nur dann ein positives Ergebnis, wenn alle funktional sicheren Module über den Kontaktplan des Computerprogrammproduktes eine positive Rückmeldung geben. Im Falle eines positiven Ergebnisses wird dies vorteilhaft angezeigt.

Durch diese Ausgestaltung erfolgt eine besonders einfache und sichere Vergabe von Adressen.

Das Computerprogrammprodukt ist zur Installation und zur Ausführung auf einer Recheneinheit ausgebildet, wobei das Computerprogrammprodukt zur Ausführung des hier beschriebenen Verfahrens dient.

Das Computerprogrammprodukt umfasst vorteilhaft die Adressierungseinrichtung. Das Computerprogrammprodukt ist vorteilhaft zumindest ein Teil eines Engineering-Tools. Das Computerprogrammprodukt kann eine Applikation oder ein Software-Funktion des Engineering-Tools. Beispielhaft für ein Engineering-Tool ist das TIA-Portal der Firma Siemens AG.

Die Recheneinheit ist zumindest zeitweise dem Netzwerk zugeordnet oder mit dem Netzwerk verbunden. Die Verbindung des Computerprogrammproduktes erfolgt vorteilhaft durch ein Prozess-Modul, insbesondere durch eine speicherprogrammierbare Steuerung.

Eine hierfür geeignete speicherprogrammierbare Steuerung ist eine SPS des Typs SIMATIC der Firma Siemens AG.

Durch die Ausführung des hier beschriebenen Verfahrens mit Hilfe des Computerprogrammproduktes kann die Vergabe der Adressen an das jeweilige Modul einfach und automatisiert erfolgen.

In einer vorteilhaften Ausgestaltung der Erfindung ist das die Adressierungseinrichtung als Teil des Engineering-Tools ausgebildet.

Vorteilhaft ist die Adressierungseinrichtung als Software-Applikation des Engineering-Tools ausgebildet.

Durch die Integration der Adressierungseinrichtung in ein bestehendes Engineering-Tool kann das Verfahren besonders einfach ausgeführt werden.

Das Computerprogrammprodukt ist vorteilhaft dazu ausgebildet, den Kontaktplan zu erstellen, wobei der Kontaktplan insbesondere den jeweiligen Steckplatz für das jeweilige Modul an dem jeweiligen Interfaces angibt.

Die Vorrichtung weist eine Mehrzahl von Module auf, wobei die Module jeweils miteinander durch ein Netzwerk verbunden sind, wobei das jeweilige Modul jeweils eine Adresse aufweist, wobei die Adresse eine Modul-Adresse und eine subsidiäre Adresse umfasst, wobei die Module zur sicheren Kommunikation ausgebildet sind, wobei die subsidiäre Adresse des jeweiligen Moduls durch die Position in dem Netzwerk definiert ist.

Die Vorrichtung weist vorteilhaft die Module und das Netzwerk auf.

Die Vorrichtung kann zur Durchführung eines hier beschriebenen Verfahrens ausgebildet sein. Die Vorrichtung kann insbesondere als Antriebssystem ausgebildet sein. Die Module können einzelne Antriebe sein, die über jeweils einen Frequenzumrichter mit dem Netzwerk verbunden sind.

Durch die eineindeutige Adressierung ist eine besonders sichere Kommunikation möglich. Somit kann die Vorrichtung und ggf. eine Anlage, welche die Vorrichtung aufweist, eine hohe Sicherheits-Zertifizierung, z.B. SIL 2 oder SIL 3, erhalten.

Bei einer vorteilhaften Ausgestaltung der Erfindung ist zumindest ein Teil der Module über ein Interface mit dem Netzwerk (wirk-) verbunden, wobei das jeweilige Interface jeweils eine Mehrzahl von Steckplätzen aufweist und wobei die subsidiäre Adresse des Moduls dem Steckplatz entspricht.

Das jeweilige Interface ist vorteilhaft baugleich aufgebaut. Die Zuweisung der zumindest eines Teils der subsidiären Adresse des jeweils an dem Interface angeschlossenen Moduls erfolgt durch den Steckplatz des jeweiligen Moduls an dem Interface.

Ein Interface weist vorteilhaft eine Mehrzahl von Steckplätzen für jeweils ein Modul auf. Das Modul kann seine subsidiäre Adresse anhand des jeweiligen Steckplatzes zugeordnet bekommen. Die Zuweisung und/oder die Änderung des Steckplatzes des jeweiligen Moduls können manuell durch einen Benutzer erfolgen.

Durch diese Ausführung der Erfindung ist die Adressierung von Modulen in einem solchen Netzwerk besonders einfach und sicher.

Bei einer weiteren vorteilhaften Ausgestaltung der Erfindung weist Modul-Adresse einen Modul-Typus auf.

Ein Modul-Typus gibt den Aufbau oder die Funktion des jeweiligen Moduls an. Beispielhaft ist ein Modul-Typus ein Typus Sensor, ein Typus Aktor, ein Typus speicherprogrammierbare Steuerung oder ein Typus Input/Output-Modul. Optional kann auch ein Interface ein Modul mit dem Modul-Typus Interface sein.

Vorteilhaft bilden der Modul-Typus und/oder die jeweilige MAC-Adresse des jeweiligen Moduls die Moduladresse.

Die industrielle Anlage weist vorzugsweise zumindest eine der hier beschrieben Vorrichtungen auf. Die industrielle Anlage ist vorzugsweise als Produktionsmaschine, als Werkzeugmaschine, oder zur Herstellung eines Grundstoffes ausgebildet.

Im Folgenden wird die Erfindung anhand von Figuren näher beschrieben und erläutert. Die in den Figuren gezeigten Merkmale können zu neuen Ausführungsformen kombiniert werden, ohne den Horizont der Erfindung zu verlassen.

Es zeigen:
- FIG 1: ein Netzwerk,
- FIG 2: ein weiteres Netzwerk sowie
- FIG 3: ein Verfahrensschema.

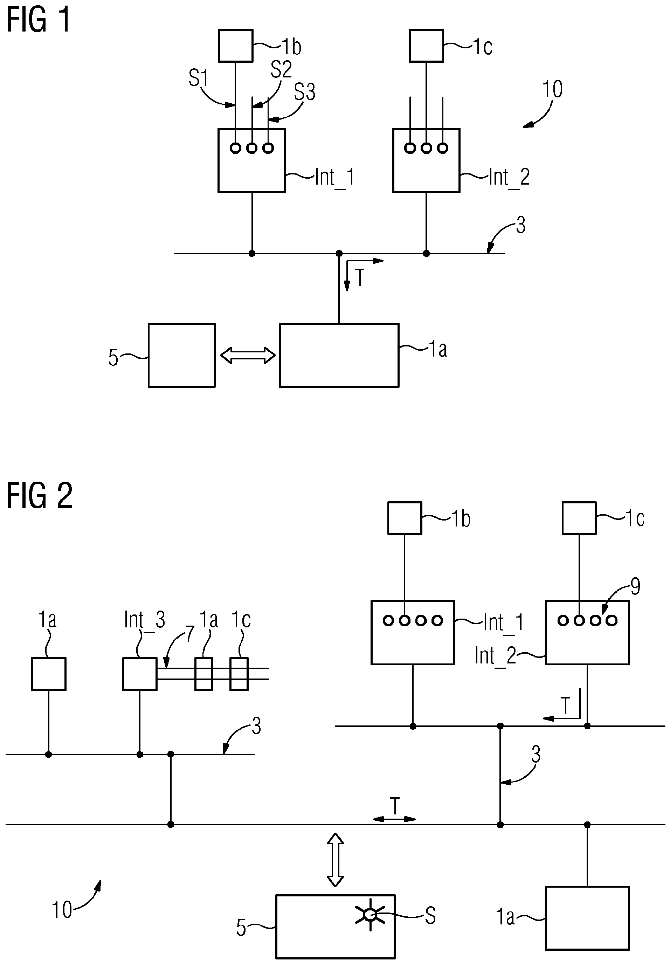

FIG 1 zeigt ein Netzwerk 10. Das Netzwerk 10 weist ein erstes Modul 1a auf. Das erste Modul 1a ist vorzugsweise als Prozessmodul, beispielsweise als speicherprogrammierbare Steuerung ausgebildet. Das erste Modul 1a ist mit einer Adressierungseinrichtung 5 gekoppelt. Das erste Modul 1a ist über eine Datenverbindung 3 mit jeweils einem erstes Interface Int_1 und einem zweiten Interface Int_2 gekoppelt.

Das jeweilige Interface Int_1, Int_2 weist jeweils Steckplätze S1, S2, S3 auf. Die Steckplätze S1, S2, S3 dienen zum Anschluss jeweils eines Moduls 1b, 1c. Beim ersten Interface Int_1 ist ein zweites Modul 1b an einem ersten Steckplatz S1 angeschlossen und so mit dem ersten Interface Int_1 verbunden. Das zweite Interface Int_2 weist ebenfalls drei Steckplätze S1, S2, S3 zum Anschluss von Modulen 1a, 1b, 1c auf.

An dem zweiten Interface Int_2 ist ein drittes Modul 1c angeschlossen. Der Anschluss des dritten Moduls 1c erfolgt am jeweils zweiten Steckplatz S2. Somit ist die Adresse A der jeweiligen Module 1a, 1b, 1c unterschiedlich, da die subsidiären Adressen Int(1a), Int(1b), Int(1c) jeweils unterschiedlich sind.

Der jeweilige Steckplatz S1, S2, S3 bildet zusammen mit dem Modul-Typus eine Modul-Adresse A(1a), A(1b), A(1c). Durch die Verwendung unterschiedlicher Steckplätze für das jeweils am Interface Int_1, Int_2 angeschlossene Modul 1b, 1c ergeben sich selbst bei ansonsten gleichen Modul-Adressen oder Modul-Typen eine unterscheidbare Adresse A. Die Kommunikation der Module T erfolgt über Telegramme T, wobei das Telegramm T jeweils durch die Datenverbindung 3 den Modulen 1a, 1b, 1c bereitgestellt wird.

**FIG 2** zeigt ein weiteres Netzwerk 10. Das weitere Netzwerk weist ein erstes Modul 1a auf, wobei das erste Modul direkt mit der Datenverbindung 3 verbunden ist. Weitere Module 1b, 1c sind über jeweils ein Interface Int_1, Int_2, Int_3 mit der Datenverbindung 3 verbunden. Die weiteren Module 1b, 1c kommunizieren über die Datenverbindung 3 jeweils über das mit ihnen verbundene Interface Int_1, Int_2, Int_3.

Das jeweilige Interface Int_1, Int_2, Int_3 weist jeweils eine Mehrzahl von Steckplätzen S1, S2, S3 auf, wobei die Steckplätze S1, S2, S3 auch als Anschlüsse an einem Rückwand-Bussystem 7 ausgebildet sein können.

Das Netzwerk weist mehrere Ebenen auf. Die Ebenen können jeweils einen subsidiären Anteil der Adresse A des jeweiligen Moduls 1a, 1b, 1c definieren.

Unter anderem ist kennzeichnend für das gezeigte Netzwerk 10, dass ein erstes Modul 1a sowohl über ein Interface Int_3 als auch direkt mit der Datenverbindung 3 verbunden sein kann. Das erste Modul 1a kann als Prozess-Modul ausgebildet sein.

Das zweite Modul 1b und das dritte Modul 1c ist beispielhaft Schalter, d. h. als gleicher Modul-Typus ausgebildet. Durch den jeweils gleichen Steckplatz in dem jeweiligen Interface Int_1, Int_2 ergibt sich demnach eine ggf. übereinstimmende Adresse A.

Zur Vergabe der Adressen an das jeweilige Modul 1a, 1b, 1c dient eine Adressierungsvorrichtung 5. Die Adressierungsvorrichtung 5 ist an das Netzwerk 10 gekoppelt. Die Adressierungsvorrichtung kann dazu direkt mit der Datenverbindung 3 verbunden sein.

Die ggf. übereinstimmende Adresse des jeweils zweiten Moduls am ersten Interface Int_1 und des dritten Moduls 1c am zweiten Interface Int 2 lässt die Adressierungseinrichtung 5 ein Signal S bereitstellen.

Durch ein manuelles Umstecken des zweiten Moduls am ersten Interface auf den dritten Steckplatz S3 kann die Eineindeutigkeit der Adresse hergestellt werden.

Vorzugsweise weist die Adressierungseinrichtung ein Display auf, auf dem eine vorteilhafte Möglichkeit für ein Umstecken dem Benutzer angezeigt wird.

Die Module 1a, 1b, 1c kommunizieren vorteilhaft durch Telegramme T, die durch die Datenverbindung 3 von dem bereitstellenden Modul 1a, 1b, 1c zum empfangenden Modul 1a, 1b, 1c übertragen wird.

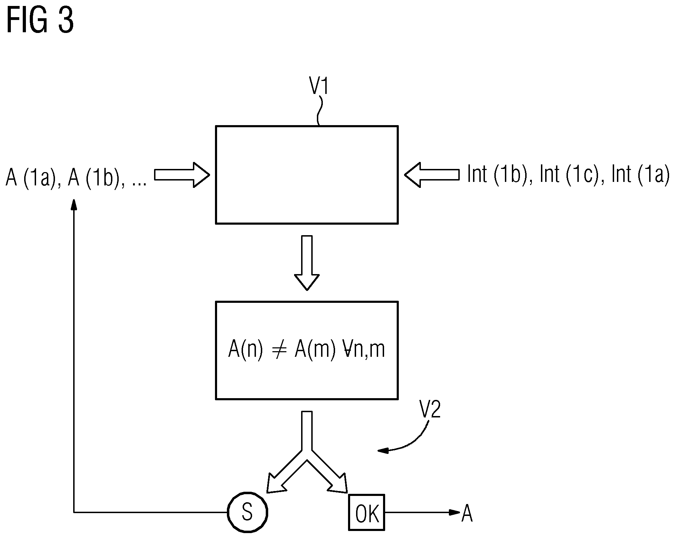

**FIG 3** zeigt ein Verfahrensschema. Das Verfahrensschema weist einen Adressierungsschritt v1 und einen Prüfungsschritt v2 auf. Bei dem Adressierungsschritt werden den jeweiligen Moduladressen A(1a), A(1b), A(1c) die jeweilige subsidiäre Adresse Int(1a), Int(1b) zugewiesen. Die subsidiäre Adresse weist bei der hier gezeigten Ausführung den Steckplatz S1, S2, S3 des jeweiligen Moduls 1a, 1b, 1c an dem jeweiligen Interface Int_1, Int_2, Int_3 auf. Aus der jeweiligen Modul-Adresse A(1a), A(1b), A(1c) und der jeweiligen subsidiären Adresse Int(1a), Int(1b), Int(1c) werden die jeweiligen Adressen A(n) bereitgestellt.

In dem Prüfungsschritt wird geprüft, ob die jeweiligen Adressen zumindest in ihrem Modul-Adresse A(1a), A(1b), A(1c) und der zugehörigen subsidiären Adresse Int(1a), Int(1b), Int(1c) eindeutig vergeben sind. Somit wird überprüft ob für alle n, m (n, m =1a, 1b, 1c,...) die Adressen jeweils unterschiedlich (A(n)#A(m)) sind.

Sind die Adressen A jeweils unterschiedlich, so werden die Adressen A dem jeweiligen Modul 1a, 1b, 1c zugeordnet. Vorzugsweise werden die Adressen A gespeichert.

Sind zwei Adressen ggf. gleich, wird ein Signal S ausgegeben. Anhand des Signals S werden die Moduladressen in Bezug zu den jeweiligen subsidiären Adressen Int(1a), Int(1b), Int(1c) neu zum Teil geändert. Dann erfolgt der Prüfungsschritt v2 erneut.

Falls der Prüfungsschritt (v2) ergibt, dass die Zuordnung der Adressen (A) eindeutig ist, wird der Adressierungsschritt (v1) ausgeführt. Hierbei werden die Adressen (A) dem jeweiligen Modul zugeordnet. Diese Adressen werden vorzugsweise in dem Netzwerk fest hinterlegt oder in einem Speicher, insbesondere der Speicher eines Prozess-Moduls, gespeichert.

Zusammenfassend betrifft die Erfindung ein Verfahren und eine Vorrichtung zur sicheren Vergabe von Adressen A an Module 1a, 1b, 1c, die in einem Netzwerk 10 mit einer Datenverbindung 3 verbunden sind. Die Adresse A des jeweiligen Moduls 1a, 1b, 1c umfasst eine Modul-Adresse A(1a), A(1b), A(1c) und eine subsidiäre Adresse Int(1a), Int(1b), Int(1c). Die subsidiäre Adresse Int(1a), Int(1b), Int(1c) gibt an, an welcher Position sich das jeweilige Modul 1a, 1b, 1c im Netzwerk 10 befindet und/oder an welchem Interface Int_1, Int_2, Int_3 das jeweilige Modul 1a, 1b, 1c angeschlossen ist. Alternativ oder zusätzlich kann die subsidiäre Adresse Int(1a), Int(1b), Int(1c) angeben, an welchem Steckplatz S1, S2, S3 des jeweiligen Interfaces Int_1, Int_2, Int_3 das Modul 1a, 1b, 1c angeschlossen ist. In einem Adressierungsschritt v1 wird die Adresse A dem jeweiligen Modul 1a, 1b, 1c zugewiesen und in einem Prüfungsschritt v2 geprüft, ob die jeweilige Adresse A des jeweiligen Moduls 1a, 1b, 1c eindeutig ist. Bei einer nicht-Eindeutigkeit wird ein Signal S bereitgestellt. Anhand des Signals S wird zumindest bei einem Modul 1a, 1b, 1c die subsidiäre Adresse Int(1a), Int(1b), Int(1c) geändert. Vorteilhaft ist so auf einfache und sichere Art und Weise eine Vergabe von Adressen A in einem Netzwerk 10 möglich.

## Patentansprüche

1. Verfahren zur sicheren Vergabe von Adressen (A) an Module (1a, 1b, 1c) in einem Netzwerk (10), wobei das jeweilige Modul (1a, 1b, 1c) eine Modul-Adresse (A(1a), A(1b), A(1c)) aufweist, wobei die jeweilige Adresse (A) jeweils die Modul-adresse (A(1a), A(1b), A(1c)) und eine subsidiäre Adresse (Int(1a), Int(1b), Int(1c)) umfasst, wobei die subsidiäre Adresse (Int(1a), Int(1b), Int(1c)) die jeweilige Position des jeweiligen Moduls (1a, 1b, 1c) in dem Netzwerk (10) angibt, wobei in einem Adressierungsschritt (v1) das jeweilige Modul (1a, 1b, 1c) mit der jeweiligen subsidiären Adresse (Int(1a), Int(1b), Int(1c)) beaufschlagt wird oder die jeweilige Adresse (A) durch das jeweilige Modul (1a, 1b, 1c) bereitgestellt wird,
wobei in einem Prüfschritt (v2) geprüft wird, ob die Kombination der jeweiligen Modul-Adresse (A(1a), A(1b), A(1c)) mit der jeweiligen subsidiären Adresse (Int(1a), Int(1b), Int(1c)) eindeutig ist,
wobei bei einer nicht-eindeutigen Belegung der Adressen (A) ein Signal (S) ausgegeben wird.

2. Verfahren nach Anspruch 1, wobei das Verfahren mit einer Adressierungseinrichtung (5) ausgeführt wird, wobei die Adressierungseinrichtung (5) hierzu dem Netzwerk (10) zugeordnet wird.

3. Verfahren nach einem der vorangehenden Ansprüche, wobei zumindest ein Teil der Module (1a, 1b, 1c) mit einem Interface (Int_1, Int_2, Int_3) verbunden sind, wobei das jeweilige Modul (1a, 1b, 1c) über das Interface (Int_1, Int_2, Int_3) mit dem Netzwerk (10) verbunden ist.

4. Verfahren nach zumindest dem Anspruch 3, wobei die subsidiäre Adresse (Int(1a), Int(1b), Int(1c)) durch die Verbindung mit dem jeweiligen Interface (Int_1, Int_2, Int_3) festgelegt wird.

5. Verfahren nach einem der vorangehenden Ansprüche, wobei die Adressen (A) nur dann dem jeweiligen Modul oder dem jeweiligen Interface (Int_1, Int_2, Int_3) bereitgestellt werden, wenn die Adressen (A) eindeutig sind, wobei nach Ausgabe des Signals (S) die jeweilige nicht-eindeutige Adresse (A) der Adressierungsschritt (v1) erneut erfolgt.

6. Verfahren nach einem der vorangehenden Ansprüche, wobei jeweils zwei Module (1a, 1b, 1c) miteinander durch zumindest ein Telegramm (T) kommunizieren, und wobei die jeweilige Adresse (A) dem Telegramm (T) beigeordnet ist.

7. Verfahren nach einem der vorangehenden Ansprüche, wobei die jeweilige Adresse (a) zumindest in dem jeweiligen Modul (1a, 1b, 1c), in dem jeweiligen Interface (Int_1, Int_2, Int_3) und/oder in der Adressierungseinrichtung (5) gespeichert wird.

8. Verfahren nach einem der vorangehenden Ansprüche, wobei das jeweilige Modul (1a, 1b, 1c) ein Sensor, ein Aktor, ein Schaltelement, oder eine speicherprogrammierbare Steuerung ist.

9. Verfahren nach einem der vorangehenden Ansprüche, wobei ein Kontaktplan erstellt wird, wobei anhand des Kontaktplans die Positionierung des jeweiligen Moduls (1a, 1b, 1c), insbesondere aller Module (1a, 1b, 1c), in dem Netzwerk (10) erfolgt, und/oder der jeweilige Anschluss des jeweiligen Moduls (1a, 1b, 1c), vorzugsweise aller Module (1a, 1b, 1c) an ihrem jeweiligen Steckplatz (S1, S2, S3) des jeweiligen Interfaces (Int_1, Int_2, Int_3) erfolgt, wobei eine überprüft wird, ob das jeweilige Moduls (1a, 1b, 1c) vorzugsweise alle Module (1a, 1b, 1c) gemäß dem Kontaktplan erreichbar sind.

10. Computerprogrammprodukt zur Installation und Ausführung auf einer Recheneinheit, wobei das Computerprogrammprodukt zur Ausführung eines Verfahrens nach einem der vorangehenden Ansprüche ausgebildet ist.

11. Computerprogrammprodukt nach Anspruch 9, wobei die Adressierungseinrichtung (5) als Teil eines Engineering-Tools ausgebildet ist.

12. Adressierungseinrichtung (5), wobei die Adressierungseinrichtung mit einem Modul (1a, 1b, 1c) und/oder dem Netzwerk (10) zeitweise zugeordnet wird, wobei die Adressierungseinrichtung (5) zur Durchführung eines Verfahrens nach einem der Ansprüche 1 bis 9 vorgesehen ist.

13. Vorrichtung, aufweisend eine Mehrzahl von Module (1a, 1b, 1c), wobei die Module (1a, 1b, 1c) jeweils miteinander durch ein Netzwerk (10) verbunden sind, wobei das jeweilige Modul (1a, 1b, 1c) jeweils eine Adresse (A) aufweist, wobei die Adresse (A) eine Modul-Adresse (A(1a), A(1b), A(1c)) und eine subsidiäre Adresse (Int(1a), Int(1b), Int(1c)) umfasst, wobei die Module (1a, 1b, 1c) zur sicheren Kommunikation ausgebildet sind, wobei die subsidiäre Adresse ((Int(1a), Int(1b), Int(1c))) des jeweiligen Moduls (1a, 1b, 1c) durch die Position des jeweiligen Moduls (1a, 1b, 1c) in dem Netzwerk (10) definiert ist, wobei ein Verfahren nach einem der Ansprüche 1 bis 9 zur Vergabe der jeweiligen Adresse vorgesehen ist.

14. Vorrichtung nach Anspruch 12, wobei zumindest ein Teil der Module (1a, 1b, 1c) über ein Interface (Int_1, Int_2, Int_3) mit dem Netzwerk (10) wirkverbunden ist, wobei das jeweilige Interface (Int_1, Int_2, Int_3) jeweils eine Mehrzahl von Steckplätzen (S1, S2, S3) aufweist und wobei die subsidiäre Adresse (Int(1a), Int(1b), Int(1c)) des Moduls (1a, 1b, 1c) dem Steckplatz (S1, S2, S3) entspricht.

15. Vorrichtung nach einem der Ansprüche 13 oder 14, wobei die Modul-Adresse (A(1a), A(1b), A(1c)) einen Modul-Typus oder eine Funktion aufweist.

16. Industrielle Anlage, aufweisend eine Vorrichtung nach einem der Ansprüche 13 bis 15.
